Europäisches Patentamt

European Patent Office

Office européen des brevets

(19)

(11) Publication number: **0 087 206**

**A1**

(12) **EUROPEAN PATENT APPLICATION**

(21) Application number: **83300077.1**

(22) Date of filing: **07.01.83**

(51) Int. Cl.³: **G 01 F 1/20**
    **G 01 F 1/78**

(30) Priority: **07.01.82 NZ 199432**

(43) Date of publication of application:
    **31.08.83 Bulletin 83/35**

(84) Designated Contracting States:
    **DE FR GB IT NL**

(71) Applicant: **NEW ZEALAND GOVERNMENT PROPERTY**
    **CORPORATION**
    **Parliament Buildings**
    **Wellington(NZ)**

(72) Inventor: **Dijstelbergen, Harmen Hein**
    **34 Nikau Street**
    **Eastbourne(NZ)**

(74) Representative: **Ayers, Martyn Lewis Stanley et al,**
    **J.A. KEMP & CO. 14 South Square Gray's Inn**
    **London, WC1R 5EU(GB)**

(54) Mass flow meter.

(57) When a fluid, gas or compressible liquid, is to be used,
e.g. as a fuel, it is better to meter the rate of flow of mass, not
volume. If the flow is not laminar and particularly if a
hydrodynamic oscillator is used, two sensors (7,9), or one
differential sensor, can show the frequency of cyclic pressure
variations and the amplitude of the differences between the
sensors.

These give directly,

$$\text{amplitude} = K_1 \times \text{density} \times (\text{velocity})^2$$
$$\text{frequency} = K_2 \times \text{velocity}$$

so the rate of mass flow may be determined.

Examples are given of a COANDA meter on which the
measurements may be made, and of computing circuits by
which the data may be converted to mass flow rates.

FIG 2

0087206

"MASS FLOW METER"

This invention relates to a mass flow meter. Flow meters for fluids may be classified as having moving parts, or not having moving parts. The first class is inherently unstable to a greater or less extent and will not be further referred to.

Fluid flow meters without moving parts may be further subdivided into free surface meters and "contained" meters. The first do not measure gases, and will not be further considered.

In "contained" meters a homogeneous fluid, commonly a gas, is measured. A subclass includes orifices and other devices in which the fluid is released from containment in the course of measurement, and are not applicable to, for instance, compressed natural gas.

A class of fluid flow meter that has been developed in the last 30 years uses hydrodynamic oscillators. They range from so called vortex shedding meters, where essentially the frequency of the KARMAN vortices generated behind a stationary object in a moving fluid is monitored, to so called swirl flow meters in which a swirling jet precesses with a frequency proportional to the flow rate. Fluidic flow meters or Coanda flow meters are related to the fluidic logic devices used some 20 years ago and can also be classified as hydrodynamic oscillators.

- 2 -

The hydrodynamic oscillators are characterised by the fact that the fluid itself oscillates with a frequency which is in first approximation linearly proportional to the flow rate. These meters do not rely on moving parts and the output frequency is largely insensitive to changes in density and viscosity.

The frequency of oscillation is sensed by monitoring a physical quantity the variations in which are caused by the hydrodynamic oscillation. Changes in velocity can be sensed for example by monitoring the cooling of a hot wire. The variations in absorption of an acoustic signal is another detecting method. The measurement of variations in pressure difference between two fixed points in the flow can also be used as a means to determine the output frequency.

If the flow rate is high enough to have passed out of the stream-line regime the amplitude of the periodic pressure fluctuations observable in the flow is proportional to the density of the fluid multiplied by the square of the velocity.

In many instances, for instance in metering a fuel, one is not so much interested in the volumetric flow rate as in the mass flow rate. Specifically with gas flow, the density is very much dependent on the pressure and the temperature of the gas. It is therefore necessary to measure (in the case of a gas or a liquid with significant compressibility) the

- 3 -

**0087206**

pressure and temperature or density in order to convert the volume flow rate to mass flow rate. To do this manually is impractically tedious. It can be done electronically, but at some expense. The present invention uses the observations hitherto converted to volume rate of flow to give the mass rate of flow simply and cheaply.

It is an object of the present invention to provide a mass flow meter more simply and cheaply than has hitherto been possible, or one that will at least provide the public with a useful choice.

Accordingly the invention consists of a mass flow meter for a fluid wherein measurements of the cyclic variations of pressure difference between two fixed points in the flow are used to define the frequency of oscillation of the fluid and so the volumetric flow rate of the fluid, and the same variations of pressure difference are used to define the amplitude of the pressure variations, whereby signals proportional to the volume flow rate and to the velocity head are obtained and wherein these signals are combined with constants of the apparatus into a mass flow rate.

The invention consists of the foregoing, and also envisages constructions, of which the following gives examples only, with reference to the accompanying drawings, in which:-

Fig 1 shows a schematic block diagram of the invention

Fig 2 shows schematically a horizontal cross section of a form of hydrodynamic oscillator that might be used in the invention

Fig 3 shows a possible method of construction of the hydrodynamic oscillator of Fig 2

Fig 4 & 5 show two circuits that might be used to convert pressure variation to mass flow rate.

It has already been stated that the volume rate of flow of a fluid can be determined from the frequency of the fluctuations of differential pressure determined between two points in a turbulent fluid and that the amplitude of these fluctuations is proportional to the density of the fluid times the square of the velocity. By measuring both the frequency and the amplitude of the pulsations one obtains signals which are proportional to the volume flow rate and the velocity head. From these data the density of the fluid and the mass flow rate can be determined using constants pertaining to the geometry of the device and the sensitivity of the differential pressure sensors.

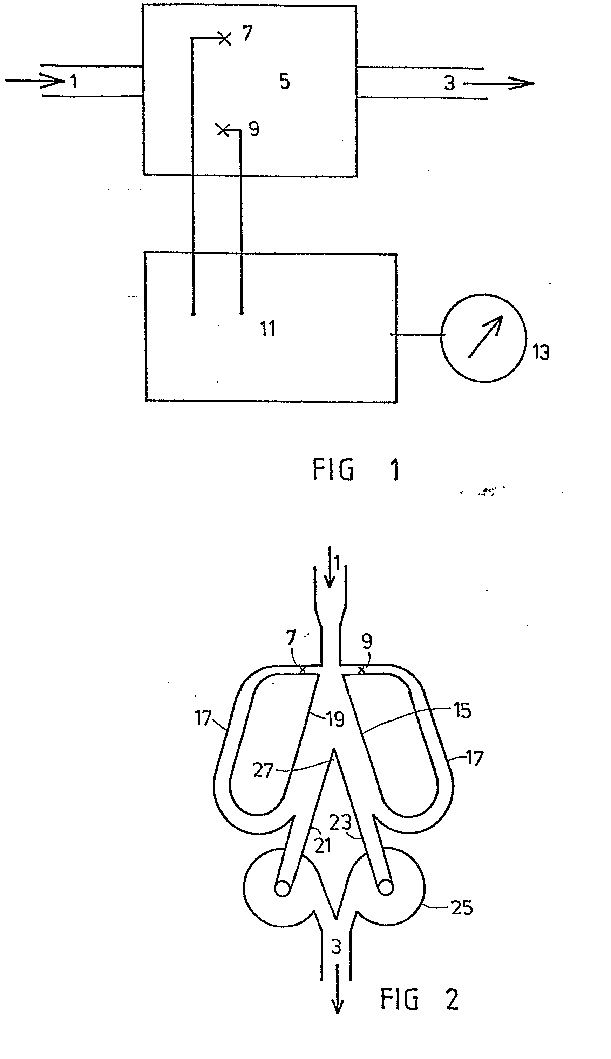

The determination can best be made electronically, and Figure 1 shows a schematic layout. The fluid to be measured flows in at 1, passes through a measuring head to be discussed later at 5 and flows out at 3. Pressure sensors at 7 and 9 or a differential pressure sensor between 7 and 9, measure the variation with time between separated points, and report the approximately sinusoidal signals to a computer 11. This is so programmed as to accept the signals that may be expressed as:

$$\text{frequency} = k_1 \times \text{linear velocity of the fluid}$$

$$\text{velocity head} = k_2 \times \text{density} \times \text{velocity squared,}$$

and to combine them with the area of a cross section of the channel in the measuring head 5 so as to obtain

$$\text{Mass flow rate} = \text{area} \times \text{velocity} \times \text{density, which may}$$

be shown on meter 13 or some form of recorder.

It has already been stated that the measuring head 5 may take many forms, but that a hydrodynamic oscillator has advantages. The form of such an oscillator that will be described is the Coanda or Fluidic feed back oscillator, but this is as an illustrative example only, and the invention may use any device that lies within the claims.

Figure 2 shows the essential cross section of a Coanda oscillator.

The Coanda or wall attachment effect is the phenomenon in which a jet of liquid or gas flowing into a diverging channel will tend to follow one or other of the diverging walls. The Coanda effect can be explained by considering a jet of fluid (liquid or gas) from a nozzle flowing into a body of relatively stationary fluid.   The jet of fluid will tend to carry some of the stationary fluid along with it.   If a wall is placed near the nozzle and angled away from the direction of the jet, the stationary fluid which is being carried along by the jet will be removed from the space between the wall and the jet.   The removal of this fluid will create a low-pressure region between the wall and the jet.   The resulting differential pressure across the jet will cause it to bend towards the wall.   This bending of the jet will continue until the jet reaches the wall and then flows along it, i.e. the jet becomes attached to the wall.

The embodiment selected for description is essentially a fluidic feedback oscillator based on the Coanda effect.   The meter, shown schematically in Figure 2 has as its inlet 1 a nozzle leading into a diverging section 15.   The jet of gas from the nozzle will tend to flow down either 19 of the two diverging walls.   The wall which the gas flows down first is determined by random fluctuations in the gas jet as the Coanda effect will amplify any slight deviation of the jet. In the meter, part of the flow down the wall is directed via a feedback channel back to the low-pressure region near the nozzle from which the jet started by bending towards the wall.   This redirected flow of gas into the low pressure region causes the jet to detach itself from the wall 19 it is flowing along and as a consequence, it attaches itself to the opposite wall.   The Coanda meter is made symmetrical so that the jet switching action repeats itself.   Thus the jet oscillates from wall to wall inside the meter with a frequency dependent on flow rate.   The frequency is determined by the time taken for the flow down each wall to establish itself well enough to create sufficient feedback pressure to overcome the Coanda effect.   The switching of the jet between the diverging walls can be sensed as pressure changes in the feedback channels at 7 and 9.

To use such a fluidic feedback oscillator as a metering device, the two separate exit channels 21 & 23 leading from the diverging walls must be brought together to a common outlet.   When the two exit channels are brought together it is necessary to prevent the flow from the flowing channel 21 passing back up the non-flowing channel 23 and interfering with the meter oscillation.   In the present meter design, this reverse flow is impeded by the incorporation of a fluidic vortex diode 25 in each exit channel.   In the normal flow direction through a vortex diode, the fluid passes through an orifice into the centre of a circular chamber and then out through the tangential outlet channel.   Any reverse flow tends to flow around the circular chamber away from the central inlet orifice.   The outlets of the two vortex diodes are joined to a common meter outlet 3.

The dimensions of the main nozzle are chosen so that at the lowest flow rate of interest, the resulting jet would be turbulent (i.e., Reynolds number above 2000).   The wall attachment process requires a turbulent jet.   The nozzle must be made as large as the turbulence criterion allows so that the total pressure drop across the meter is as small as possible. The feedback channels 17 are to be kept short so that the oscillating frequency is high to give the meter a good readability. Higher oscillating frequencies could also be obtained with a smaller main nozzle but at the expense of a higher pressure drop across the meter. The dimensions of the vortex diodes should be chosen as a compromise between high reverse flow impedance and small physical size. The distance of the splitter (the wedge shape between the diverging walls) from the nozzle is a compromise between a high oscillating frequency and good rangeability. Shortening the distance between the splitter and the nozzle increases the oscillating frequency for a given flow rate but causes increased interference on the signal from the meter.

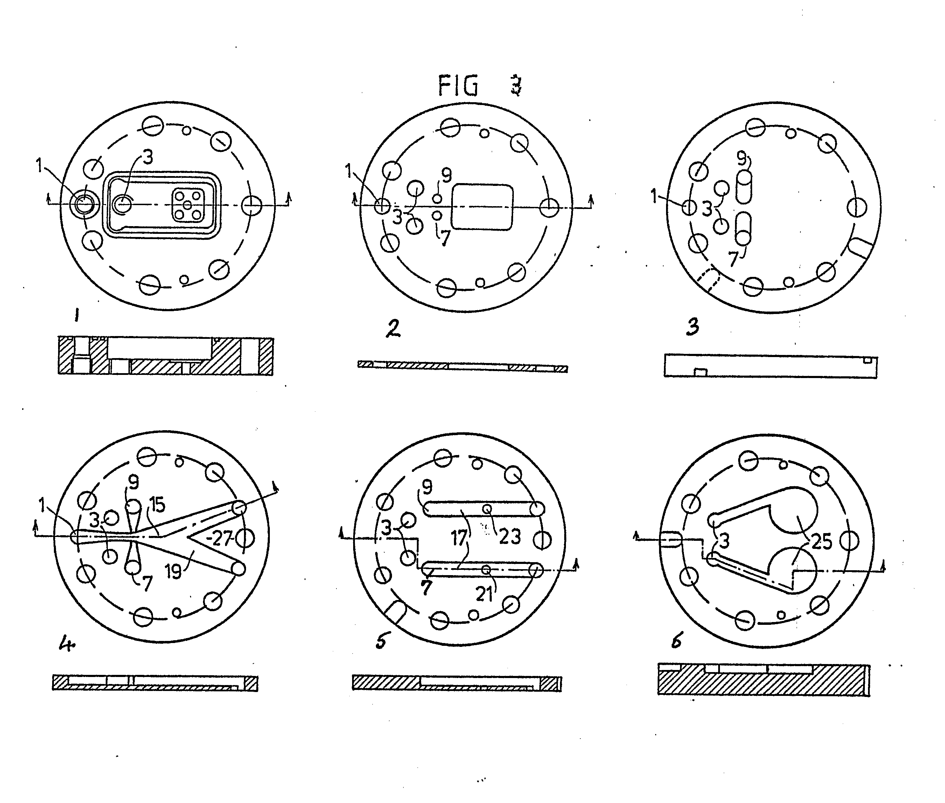

A number of different versions have been constructed, one of which is shown in Figure 3. This version is constructed of layers of clear Perspex (polymethyl methacrylate) held together with brass screws. Other versions have been made of aluminium and of steel. In the version shown, the feedback channels and outlet channels are in different layers from the main oscillator section. Figure 3 shows the various channels and chambers machined into the different layers that make up the meter.

Referring to the drawings in Figure 3, the inlet, outlet and pressure oscillation sensor connections are made via fittings screwed into the top layer (1). Layers (2) and (3) contain channels. Layer (4) contains the main nozzle and the diverging section. Layer (5) contains the feedback channels and layer (6) forms the two vortex diodes which lead to the outlet 3 of the measuring head.

**0087206**

When the meter is to be used to measure the mass flow rate of a gas under pressure, simple clamping together by screws of the various plates does not prevent leakage, so either the whole instrument is enclosed in a pressure vessel or an o-ring is clamped near the edge of each pair of plates, or surrounds each of the machined regions as shown in Figure 3 layer (1).

7 and 9, shown in Fig. 1 as pressure sensors, may be any form of sensitive, high frequency response transducer. It may be convenient if the transducer is not placed directly on the measuring head, but is connected to points 7 and 9 by narrow bore tubing that may conveniently be of copper. The pressures at 7 and 9 need not be measured separately. The transducer may be differential. There is a wide choice in the possible form of differential pressure transducer. Initially a rather elaborate commercial instrument was used, but it has been found possible and convenient to use a simple semi-conductor strain gauge which may be a diaphragm.

Its output will normally be electrical. Many electronic arrangements are possible to extract the mass flow rate from the electrical signals derived from pressure differences or variations.

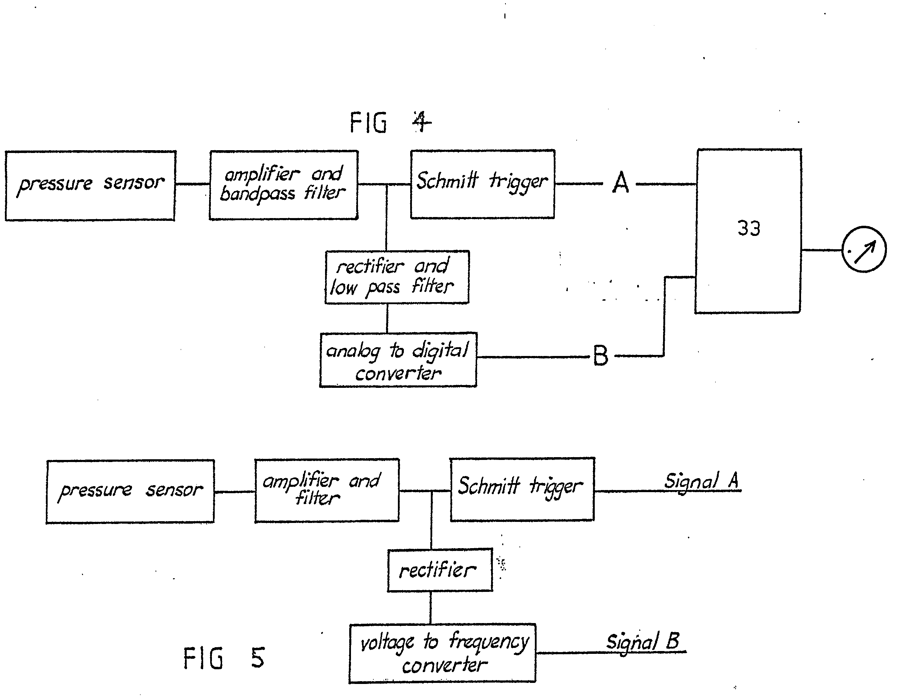

One possible form is shown in Figure 4. At A is a 0087206 wave signal at the frequency of the hydrodynamic oscillation, which is proportional to v the flow velocity. At B is a digital number whose value is proportional to the signal amplitude, and hence to $dv^2$ where d is the fluid density.

33 is a microprocessor, programmed to calculate the mass flow rate from

mass flow rate = constant x (value of B) x (period of A)

A second possible form is shown in Figure 5. The circuit of Figure 5 differs from that of Figure 4 in that the rectifier is not followed by a lowpass filter, and the analog to digital converter is replaced by a voltage to frequency converter. The A & B outputs are now both measures of frequency and can be converted to mass flow rate by establishing the ratio of B to A.

What we claim is:

1.  A mass flow meter for a fluid wherein measurements of the cyclic variations of pressure difference between two or more points in the flow are used to define the frequency of oscillation of the fluid and so the volumetric flow rate of the fluid, and the same variations of pressure difference are used to define the amplitude of the pressure variations, whereby signals proportional to the volume flow rate and to the velocity head are obtained and wherein these signals are combined with constants of the apparatus into a mass flow rate.

2.  A mass flow meter as claimed in claim 1 including a hydrodynamic oscillator.

3.  A mass flow meter as claimed in claim 1 including a positive feedback oscillator.

4.  A mass flow meter as claimed in any preceding claim including a channel for the fluid which is adapted to act as a feedback channel.

5.  A mass flow meter as claimed in any preceding claim wherein an electrical signal derived from the fluid pressure oscillations is so processed as to produce a signal proportional to the mass flow rate of the fluid through the meter.

6.  A mass flow meter as claimed in claim 5 wherein the signal is processed by dividing the measure of the amplitude by the measure of its frequency to give the mass flow rate.

7.  A mass flow meter as claimed in claim 6 wherein the measure of the amplitude and the measure of the frequency are separately determined and are combined by a microprocessor.

8.  A mass flow meter as claimed in claim 6 wherein the measure of the amplitude of the pressure variations is so treated as to be a measure in units of frequency and is divided by the measure of the frequency to give a measure of the mass flow rate.

9.  A mass flow meter for a fluid when designed, constructed and arranged as hereinbefore described with particular reference to the accompanying drawings.

10.  A method of determining the rate of mass flow of a fluid when carried out by the operation of the mass flow meter herein described and claimed.

0087206

FIG 1

FIG 2

0087206

0087206

## FIG 4

```
┌──────────────────┐     ┌──────────────────┐     ┌──────────────────┐
│ pressure sensor  │─────│ amplifier and    │──┬──│ Schmitt trigger  │──── A ─────┐
└──────────────────┘     │ bandpass filter  │  │  └──────────────────┘           │
                         └──────────────────┘  │                          ┌───────────────┐
                                               │                          │               │
                                 ┌──────────────────┐                     │      33       │──( ↗ )
                                 │ rectifier and    │                     │               │
                                 │ low pass filter  │                     └───────────────┘
                                 └──────────────────┘                          │
                                          │                                    │
                                 ┌──────────────────┐                          │
                                 │ analog to digital│──────── B ───────────────┘
                                 │ converter        │
                                 └──────────────────┘
```

```
┌──────────────────┐     ┌──────────────────┐     ┌──────────────────┐
│ pressure sensor  │─────│ amplifier and    │──┬──│ Schmitt trigger  │──── Signal A
└──────────────────┘     │ filter           │  │  └──────────────────┘
                         └──────────────────┘  │
                                     ┌──────────────────┐
                                     │    rectifier     │
                                     └──────────────────┘
                                              │
                                     ┌──────────────────────┐
                                     │ voltage to frequency │──── Signal B
                                     │ converter            │
                                     └──────────────────────┘
```

## FIG 5

## DOCUMENTS CONSIDERED TO BE RELEVANT

EP 83300077.1

| Category | Citation of document with indication, where appropriate, of relevant passages | Relevant to claim | CLASSIFICATION OF THE APPLICATION (Int. Cl. 3) |
|---|---|---|---|
| Y | <u>DE - A1 - 2 748 616</u> (GENERAL ELECTRIC) | 1-4, | G 01 F 1/20 |
| | | | G 01 F 1/78 |
| | * Page 11, lines 19-30; fig. 1,4 * | 5-10 | |
| | -- | | |
| X | <u>DE - A - 1 498 271</u> (AMERICAN RADIATOR) | 1,2,5, 6,10 | |
| Y | * Fig. 2; page 15, line 3 - page 19, line 4; fig. 7 * | 5-10 | |
| | -- | | |
| X,Y | <u>DE - A - 2 414 970</u> (UNITED KINGCOM ATOMIC) | 1-4 | |
| | * Page 3, line 30 - page 4, line 4 * | | |
| | ---- | | |
| | | | TECHNICAL FIELDS SEARCHED (Int. Cl. 3) |
| | | | G 01 F |

The present search report has been drawn up for all claims

| Place of search | Date of completion of the search | Examiner |
|---|---|---|
| VIENNA | 09-06-1983 | MELHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82